# EUROPÄISCHE PATENTSCHRIFT

(11) **EP 4 061 540 B1**
(45) Veröffentlichungstag und Bekanntmachung des Hinweises auf die Patenterteilung: **20.03.2024**
(21) Anmeldenummer: 22703620.9
(22) Anmeldetag: 03.02.2022
(51) Int. Cl.: B05B 9/04

(54) **HANDGEFÜHRTES DRUCKFLÜSSIGKEITSGERÄT**
HAND-OPERATED PRESSURE FLUID DEVICE
DISPOSITIF DE FLUIDE SOUS PRESSION ACTIONNÉ MANUELLEMENT

(30) Priorität: 12.02.2021 DE 102021103306
(43) Veröffentlichungstag der Anmeldung: 28.09.2022
(73) Patentinhaber: Kolektor Mobility d.o.o., 5280 Idrija (SI)
(72) Erfinder: PETRIC, Klemen, 5280 Idrija (SI); CRV, Matija, 5280 Idrija (SI); MARINKO, Jure, 1370 Logatec (SI)
(74) Vertreter: Grättinger Möhring von Poschinger Patentanwälte Partnerschaft mbB
(86) Internationale Anmeldenummer: PCT/EP2022/052530
(87) Internationale Veröffentlichungsnummer: WO 2022/171512

(56) Entgegenhaltungen:
- EP-A1- 3 296 021
- WO-A1-2020/011153
- WO-A2-2010/047800
- WO-A2-2012/084289
- DE-A1-102012 208 511

## Beschreibung

Die vorliegende Erfindung betrifft, wie im Oberbegriff des Anspruchs 1 angegeben, ein handgeführtes Druckflüssigkeitsgerät, z. B. Druckflüssigkeits-Sprühgerät oder -Reinigungsgerät, umfassend eine eine Motor-Pumpe-Gruppe aufnehmende Gehäusestruktur, einen saugseitig an die Pumpe angeschlossenen Flüssigkeitseinlass, einen druckseitig an die Pumpe angeschlossenen, an einer Düseneinheit ausgeführten Flüssigkeitsaustritt, eine elektrische Spannungsquelle und mindestens ein auf die Stromversorgung des Motors durch die Spannungsquelle einwirkendes Bedienelement.

Druckflüssigkeitsgeräte, welche aus einer entsprechenden Düse einen Flüssigkeitsstrahl abgeben, sind in verschiedenen Konzeptionen bekannt und - insbesondere für Reinigungszwecke - im Einsatz. Besonders verbreitet sind Geräte mit einer - einen Flüssigkeitsbehälter sowie eine Motor-Pumpe-Gruppe (Kompressor) aufweisenden - Basiseinheit und einer mit dieser über einen Druckschlauch verbundenen, die Düse sowie eine Handhabe aufweisenden Handsprühvorrichtung. Typischerweise ist die Düse dabei am Ende einer Lanze angeordnet. Hierzu ist beispielhaft zu verweisen auf die US 7028925 B2. Bekannt, wenngleich bisher weniger verbreitet, sind weiterhin gattungsgemäße handgeführte Druckflüssigkeitsgeräte, bei denen die Motor-Pumpe-Gruppe Teil des jeweiligen Handgeräts ist. Die Motor-Pumpe-Gruppe saugt dabei Flüssigkeit über den Flüssigkeitseinlass an, der typischerweise über einen (Saug-)Schlauch mit einem Flüssigkeitsreservoir (z. B. Eimer, Kanister, etc.) kommuniziert. Zum Stand der Technik ist insoweit beispielhaft zu verweisen auf DE 10 2004 049 630 A1, CN 208800465 U, CN 110107495 A, CN 201404879 Y, CN 207839479 U, CN 2107753311 U, WO 2020043032 A1, WO 2020011153 A1, CN 110280518 B und CN 207641700 U.

Die vorstehend genannte WO 2020011153 A1, welche für die vorliegende Erfindung als nächstkommender Stand der Technik angesehen wird, offenbart dabei ein gattungsgemäßes handgeführtes Druckflüssigkeitsgerät, bei dem eine Drei-Kolben-Axialkolbenpumpe von einem als Schnellläufer ausgeführten Getriebe-Elektromotor angetrieben wird.

Aus der DE 10 2012 208 511 A1 ist ein Gerät zur Förderung von flüssigem oder pastösem Fluid bekannt, bei der der Rotor einer Taumelrotorpumpe ausschließlich durch Muskelkraft einer Bedienperson drehbar ist. Hierzu kann der Pumpenrotor über eine Welle insbesondere von einer solchen Hand-Antriebsvorrichtung in hin- und hergehende Drehung versetzt werden, welche zwei bezüglich einander bewegbare, über Zahnstangen auf ein mit der Welle verbundenes Ritzel einwirkende Griffelemente umfasst.

Gegenüber den an erster Stelle genannten Druckflüssigkeitsgeräten mit einer von der Handsprühvorrichtung getrennten Basiseinheit haben bisher bekannte handgeführte Druckflüssigkeitsgeräte der an zweiter Stelle genannten, gattungsgemäßen Art hinsichtlich der Handhabung praxisrelevante Nachteile. Denn indem sowohl die Motor-Pumpe-Gruppe als auch die Spannungsquelle Teil des Handgeräts sind, ist dieses deutlich schwerer als die Handsprühvorrichtung des an erster Stelle genannten Druckflüssigkeitsgeräts. Dies verkürzt die Zeitspanne, innerhalb derer ein ermüdungsfreies Arbeiten möglich ist. Zudem führt die Integration der Motor-Pumpe-Gruppe in das Handgerät zu Vibrationen des letzteren. Auch dies ist einem ermüdungsfreien Betrieb abträglich.

Die vorliegende Erfindung hat sich zur Aufgabe gemacht, hier Abhilfe zu schaffen. Insbesondere solle ein gegenüber dem Stand der Technik hinsichtlich der Handhabung verbessertes handgeführtes Druckflüssigkeitsgerät der gattungsgemäßen Art bereitgestellt werden.

Gelöst wird diese Aufgabe gemäß der vorliegenden Erfindung, indem bei einem gattungsgemäßen handgeführten Druckflüssigkeitsgerät der Motor der Motor-Pumpe-Gruppe als bürstenloser Gleichstrommotor und die Pumpe als Taumelrotorpumpe mit zwei jeweils eine ringförmige Stirnverzahnung aufweisenden Zahnscheiben ausgeführt ist, wobei die Zahnanzahlen der beiden miteinander kämmenden Stirnverzahnungen sich um 1 voneinander unterscheiden und die im Winkel zueinander angeordneten Zahnscheiben dergestalt relativ zueinander wandern, dass die Stirnverzahnungen mehrere sich im Pumpenbetrieb vergrößernde und verkleinernde (wandernde) Pumpenräume begrenzen. Durch Verwendung der erfindungsgemäß zum Einsatz kommenden, sich durch die anspruchsgemäße Kombination eines spezifischen Elektromotors mit einer spezifischen Pumpe auszeichnenden Motor-Pumpe-Gruppe lässt sich ein handgeführtes Druckflüssigkeitsgerät mit überragender, bisher nicht erzielbarer Praxistauglichkeit bereitstellen. Namentlich zeichnet sich das erfindungsgemäße handgeführte Druckflüssigkeitsgerät durch eine extreme Laufruhe aus. Es arbeitet praktisch vibrationsfrei. Und zwar sind nicht nur durch die Motor-Pumpe-Gruppe induzierte Vibrationen und Schwingungen substantiell geringer als bei - zumeist mit Axialkolbenpumpen arbeitenden - Geräten nach dem Stand der Technik. Vielmehr sind auch solche Vibrationen, welche auf ein Pulsieren der die Düse verlassenden Flüssigkeit (insbesondere Flüssigkeitsstrahl oder -nebel) zurückgehen, entschieden geringer als bei bekannten gattungsgemäßen handgeführten Druckflüssigkeitsgeräten. Dies ist, namentlich in Kombination miteinander, ein extremer Vorteil für eine ermüdungsfreie Handhabung des handgeführten Druckflüssigkeitsgeräts. Hinzu kommt, dass die spezifische erfindungsgemäße Ausführung der Motor-Pumpe-Gruppe - verglichen mit dem Stand der Technik - eine substantielle Reduktion des Gewichts des handgeführten Druckflüssigkeitsgeräts ermöglicht. Dazu trägt auch die besonders hohe Effizienz der Motor-Pumpe-Gruppe bei, aufgrund derer für eine definierte Anwendungs- bzw. Betriebsdauer eine vergleichsweise kleine (leichte) Batterie ausreichend ist. In Verbindung mit dem extrem vibrationsarmen Betrieb des Geräts resultieren hieraus einzigartig günstige Betriebseigenschaften. Als zusätzlicher Vorteil kommt hinzu, dass die erfindungsgemäß zum Einsatz kommende Motor-Pumpe-Gruppe einen stabilen, zumindest weitgehend pulsationsfreien Betrieb des Druckflüssigkeitsgeräts - mit den vorstehend dargelegten günstigen Betriebseigenschaften - innerhalb einer großen Bandbreite mit unterschiedlichen Flüssigkeitsdurchsätzen ermöglicht. So können auch solche Druckflüssigkeitsgeräte bereitgestellt werden, mit denen - z. B. für das feine Aufbringen von Desinfektionsmitteln auf Oberflächen - homogene, fein-zerstäubte Nebel ausgebracht werden können. Und weiterhin ist besonders vorteilhaft, dass die die nach der Erfindung zum Einsatz kommende Pumpe zuverlässig selbstansaugend ist, was ein großer Vorteil ist bei der - ggf. über einen längeren Schlauch erfolgenden - Speisung des Druckflüssigkeitsgeräts aus einem deutlich unterhalb von diesem angeordneten Eimer, Kanister oder dergleichen.

Die im Rahmen der vorliegenden Erfindung zum Einsatz kommenden Taumelrotorpumpen können nach zwei unterschiedlichen Konzepten aufgebaut sein. Zum einen kommt in Betracht, dass die beiden Zahnscheiben der Pumpe rotierend ausgeführt sind mit einer mit dem Motor drehgekoppelten treibenden Zahnscheibe und einer von dieser in Drehung versetzten getriebenen Zahnscheibe. Eine Taumelrotorpumpe nach diesem Konzept ist beispielsweise der WO 2005/116403 A1, der WO 2010/018053 A1 und der WO 2012/084289 A2 entnehmbar. Auch die (zum Prioritätstag der vorliegenden Patentanmeldung noch ausstehende) Offenlegung zur deutschen Patentanmeldung 10 2020 124 825.3 betrifft eine solche Doppelrotor-Taumelrotorpumpe. Zum anderen kann eine der beiden Zahnscheiben als Stator und die andere als auf diesem taumelnd abgewälzter Rotor ausgeführt sein, wobei der Motor über einen Taumelkopf auf den Rotor einwirkt, indem der Taumelkopf mit seiner zur Rotationsachse des Taumelkopfs geneigten Stirnfläche an der der Ringverzahnung abgewandten Seite des Rotors an diesem anliegt (vgl. beispielsweise DE 10 2014 219 219 A1, WO 2015/090730 A1, US 2016/0097388 A1 und WO 2018/054622 A1). Die zuerst genannte Variante (Doppelrotor-Konzept) ist dabei hinsichtlich einiger der hier besonders interessierenden Betriebseigenschaften der an zweiter Stelle genannten Variante (TMC-Konzept) überlegen. Namentlich gilt dies für das auch bei geringen bzw. sogar sehr geringen Durchsätzen weitestgehend pulsationsfreie Ausbringen von Flüssigkeiten. Auf der anderen Seite hat das TMC-Konzept Vorteile hinsichtlich der Baugröße, insbesondere bei auf hohe Durchsätze ausgelegten Druckflüssigkeitsgeräten. So richtet sich die konkrete Auswahl im Einzelfall nach den individuell besonders verfolgten Zielsetzungen.

Ist die Taumelrotorpumpe gemäß dem TMC-Konzept ausgeführt, so ist die Motor-Pumpe-Gruppe gemäß einer besonders bevorzugten Weiterbildung der Erfindung in der Gehäusestruktur so verbaut, dass der Motor dem Flüssigkeitsaustritt zugewandt ist. Die Pumpe der Motor-Pumpe-Gruppe ist dabei demgegenüber dem Benutzer zugewandt, wenn dieser das Druckflüssigkeitsgerät bestimmungsgemäß hält. Dies ist nicht nur unter dem Gesichtspunkt einer die ermüdungsfreie Bedienung begünstigenden optimalen Gewichtsverteilung vorteilhaft. Vielmehr ist eine solche Gestaltung auch günstig im Hinblick auf Möglichkeiten zur Gestaltung eine hohe Leistung aufweisender Geräte mit besonders kompakten Abmessungen. Im Rahmen dieser Weiterbildung ist weiterführend ganz besonders vorteilhaft, wenn der Motor einen durchgehend hohlen Motorrotor aufweist, dessen Hohlraum Teil des den Pumpenausgang mit dem Flüssigkeitsaustritt verbindenden Strömungswegs ist. Unter anderem lässt sich auf diese Weise eine besonders effektive Kühlung des Motors von innen her gewährleisten, so dass raumgreifende äußere Kühlelemente überflüssig sind.

Ist demgegenüber die Taumelrotorpumpe gemäß dem Doppelrotor-Konzept ausgeführt, so ist die Motor-Pumpe-Gruppe gemäß einer besonders bevorzugten Weiterbildung der Erfindung in der Gehäusestruktur so verbaut, dass die Pumpe dem Flüssigkeitsaustritt zugewandt ist. Insbesondere kann dabei die Motor-Pumpe-Gruppe ein einen Motorstator aufnehmendes Motorgehäuse und ein dichtend mit diesem verbundenes, den Pumpeneinlass und den Pumpenauslass aufweisendes Pumpengehäuse umfassen, wobei mit dem Pumpengehäuse insbesondere ein feststehender Zapfen verbunden sein kann, der sich durch die getriebene Zahnscheibe, die treibende Zahnscheibe und (zumindest teilweise) den Motorrotor hindurch erstreckt. Der Zapfen kann dabei als Lagerzapfen für die drehbare Lagerung des Motorrotors und/oder der treibenden Zahnscheibe dienen. Besonders bevorzugt erfolgt indessen eine - als Gleitlagerung ausgeführte - Lagerung der treibenden Zahnscheibe bzw. des diese umfassenden ersten Pumpenrotors direkt in einer korrespondierenden Aufnahme des Pumpengehäuses, wobei zwischen dem Zapfen und dem ersten Pumpenrotor ein (schmaler) Ringspalt verbleibt. Im Sinne eines hohen Integrationsgrades können dabei der Motorrotor und der erste Pumpenrotor zu einer starren Baueinheit gefügt sein, so dass der Motorrotor keiner gesonderten, eigenen Lagerung bedarf. So lassen sich mit sehr geringem baulichen Aufwand besonders kompakte Motor-Pumpe-Gruppen mit hoher Laufruhe realisieren. Auch zwischen dem Motorrotor und dem Zapfen kann in diesem Falle ein (schmaler) Ringspalt verbleiben, durch den hindurch insbesondere ein Druckausgleich des Innenraumes des Motorgehäuses erfolgen kann. Auch durch einen hohen Integrationsgrad dergestalt, dass eine integrierte Gehäusestruktur der Motor-Pumpe-Einheit sowohl Funktionen von Motorstator und/oder Motorgehäuse als auch Funktionen des Pumpengehäuses wahrnimmt, lässt sich das erfindungsgemäße Druckflüssigkeitsgerät weiter optimieren; denn die auf diese Weise erzielbare Minimierung des Gewichts kommt der Handhabbarkeit entgegen.

Unabhängig davon, welche der beiden Taumelpumpen-Bauweisen im Einzelfall zum Einsatz kommt, ist besonders vorteilhaft, wenn der Motorrotor direkt auf die von ihm angetriebene Zahnscheibe der Taumelrotorpumpe wirkt. Im Falle des Einsatzes einer Taumelrotorpumpe nach dem Doppelrotor-Konzept bedeutet dies, dass der Motorrotor und die von diesem angetriebene Zahnscheibe stets mit identischer Drehzahl rotieren, d. h. keinerlei eine Untersetzung, Übersetzung oder sonstige Beeinflussung des Drehzahlverhältnisses bewirkendes Getriebe vorgesehen ist. Ein solcher Wegfall eines Getriebes wirkt sich vorteilhaft nicht nur auf das Gewicht des Druckflüssigkeitsgeräts aus, sondern auch auf die Laufruhe. Hiervon profitiert wiederum die angenehme Handhabbarkeit über einen langen Zeitraum.

Namentlich dann, wenn das erfindungsgemäße Druckflüssigkeitsgerät - im Hinblick auf die exzellente Dosierbarkeit der über die Düseneinheit abgegebenen Flüssigkeitsmenge (s. o.) - über eine Taumelrotorpumpe nach dem Doppelrotor-Konzept verfügt, ist der Pumpe bevorzugt mindestens ein die Pumpendrehzahl erfassender Sensor zugeordnet. Besonders vorteilhaft ist dabei die Implementierung mindestens eines Hall-Sensors in dem Pumpengehäuse dergestalt, dass er die Drehzahl bzw. Drehstellung der treibenden Zahnscheibe und/oder der getriebenen Zahnscheibe erfasst.

Für eine ermüdungsfreie Handhabung des erfindungsgemäßen handgeführten Druckflüssigkeitsgeräts weist dessen Gehäusestruktur besonders bevorzugt eine Griffstruktur auf, welche von der übrigen Gehäusestruktur schräg nach hinten-unten absteht. Besonders günstig ist es dabei, wenn eine gedachte Mittellinie der Griffstruktur mit der Achse der Düseneinheit einen Winkel zwischen 100° und 110° einschließt. Im Interesse optimaler Handhabbarkeit ist dabei weiterhin vorteilhaft, wenn die Spannungsquelle - diese ist zweckmäßigerweise ein wiederaufladbarer Akku - an der Griffstruktur an deren unterem Ende angeordnet ist. So ergibt sich ein besonders ausbalanciertes Gerät. Zweckmäßigerweise ist die Spannungsquelle dabei abnehmbar; so ist sie auf einer externen Ladestation aufladbar, und das Druckflüssigkeitsgerät kann bedarfs- und anwendungsabhängig mit Spannungsquellen unterschiedlicher Größe und Kapazität bestückt werden.

Im Hinblick auf eine vielseitige Nutzbarkeit des erfindungsgemäßen handgeführten Druckflüssigkeitsgeräts auf einer großen Bandbreite möglicher Anwendungen (z. B. für Reinigungsaufgaben, für die Sprüh-Aufbringung von Chemikalien und/oder sonstigen Substanzen auf Oberflächen, für die Ausbringung von Pflanzenschutzmitteln in landwirtschaftlichen Kulturen, etc.) ist die Düseneinheit bevorzugt verstellbar und weist mehrere unterschiedlich ausgeführte Düsen auf, von denen jeweils eine fluidisch mit dem Druckausgang der Pumpe koppelbar ist. Mittels geeigneter Geometrien der verschiedenen Düsen lassen sich der die Düseneinheit verlassenden Flüssigkeit unterschiedliche räumliche Ausbildungen (z. B. scharfer Strahl, flacher Fächer, Kegelform, Tröpfchenwolke, Nebel, etc.) aufprägen. Der Flüssigkeitsauslass des handgeführten Druckflüssigkeitsgeräts kann auch Teil eines in einer Düsenaufnahme auswechselbar aufgenommenen, in dieser (beispielsweise über einen Bajonett-Verschluss oder ein Schraubgewinde) fixierten Düseneinsatzes ein. Für typische Nutzer des Geräts ist eine Mischform dergestalt günstig, dass dessen integrierte Düseneinheit zwei oder drei vorgegebene unterschiedliche, wahlweise aktivierbare Standard-Düsen sowie einen alternativ aktivierbaren zusätzlichen Anschluss (Düsenaufnahme) für individuelle Spezialdüsen aufweist.

Verfügt im vorstehenden Sinne die Düseneinheit des erfindungsgemäßen handgeführten Druckflüssigkeitsgeräts über eine Mehrzahl wahlweise aktivierbarer Düsen unterschiedlicher Geometrie, so ist weiterhin sehr vorteilhaft, wenn die jeweilige momentane Einstellung der Düseneinheit erfasst und ein entsprechendes Signal auf die Gerätesteuerung geschaltet wird; denn so kann beispielsweise - durch Einwirkung auf die Drehzahl des Motors der Motor-Pumpe-Gruppe, namentlich in Form einer geeigneten Drehzahlbegrenzung - der FlüssigkeitsDurchsatz optimal auf die jeweils zum Einsatz kommende Düse abgestimmt werden.

Gemäß einer wiederum anderen bevorzugten Ausgestaltung der vorliegenden Erfindung wirkt das auf die Stromversorgung des Motors der Motor-Pumpe-Gruppe einwirkende Bedienelement weiterhin auch auf ein Absperrventil ein, welches in dem Strömungsweg zwischen Flüssigkeitseinlass und Flüssigkeitsaustritt angeordnet ist. Das - in dem besagten Strömungsweg bevorzugt stromaufwärts der Pumpe angeordnete - Absperrventil ist dabei besonders bevorzugt mechanisch mit dem Bedienelement gekoppelt und öffnet unmittelbar bei Betätigung des Bedienelements. In bevorzugter alternativer Ausgestaltung wird das Absperrventil mittels eines elektrischen Aktuators (z. B. einen Elektromagneten) betätigt, welcher - bei Betätigung des Bedienelements - parallel zu der Pumpe mit Strom beaufschlagt wird. Besonders nützlich ist ein derartiges Absperrventil, wenn an dem Flüssigkeitseinlass ein Vordruck anliegt, beispielsweise bei einem Anschluss des Druckflüssigkeitsgeräts an das Hauswasser-Netz. Aber auch bei einer drucklosen Versorgung des Druckflüssigkeitsgeräts mit Flüssigkeit, beispielsweise bei dessen Speisung aus einem Kanister, kann das besagte Absperrventil vorteilhaft sein; denn indem bei NichtBetätigung des Bedienelements das Absperrventil geschlossen ist, wird verhindert, dass bei einer Unterbrechung der Benutzung in dem Gerät vorhandene Flüssigkeit - je nach der Lage des abgelegten Geräts - zuström- oder abströmseitig aus diesem austritt. Das kann besonders wichtig werden bei Einsatz des handgeführten Druckflüssigkeitsgeräts mit Chemikalien (s. u.).

Das besagte Absperrventil kann dabei gegebenenfalls als Proportionalventil ausgeführt sein, dessen Durchtrittsquerschnitt von der jeweiligen Stellung des Bedienelements der Fördermenge abhängt. Dies gilt namentlich, wenn sich mittels des Bedienelements auch die Motor-Pumpe-Gruppe hinsichtlich der Drehzahl/Förderung proportional steuern lässt. Entsprechendes gilt, wenn gemäß einer anderen bevorzugten Ausgestaltung der Erfindung - insbesondere an der Gehäusestruktur angeordnet - ein Dreh- oder Schieberegler vorgesehen ist, durch dessen Einstellung sich die Drehzahl des Motors einer mit veränderlichem Flüssigkeitsdurchsatz betreibbaren Motor-Pumpe-Gruppe vorgeben lässt. Auch hier kann, wenn das Bedienelement betätigt ist und somit die Motor-Pumpe-Gruppe sich im Förderbetrieb befindet, die Stellung eines als Proportionalventil ausgeführten Absperrventils, d. h. dessen Öffnungsquerschnitt, in Abhängigkeit von der an dem Dreh- oder Schieberegler vorgenommenen Einstellung und somit der Förderleistung der Motor-Pumpe-Gruppe vorgegeben werden.

Im Hinblick auf die - gemessen am Stand der Technik - sehr große Bandbreite für den Einsatz des erfindungsgemäßen handgeführten Druckflüssigkeitsgeräts ist hervorzuheben, dass die zum Einsatz kommende Pumpe sich durch ihre spezifische Bauart zum Fördern einer Vielzahl verschiedener, sich insbesondre hinsichtlich ihrer physikalischen und chemischen Eigenschaften unterscheidender Flüssigkeiten eignet. Um dieses Potential auszunutzen zeichnet sich eine abermals andere bevorzugte Weiterbildung der vorliegenden Erfindung dadurch aus, dass die flüssigkeitsführenden Komponenten des handgeführten Druckflüssigkeitsgeräts säure- und basenresistent sind. Besonders geeignete Materialien für - je nach Konzeption (s. o.) - die beiden Pumpenrotoren bzw. den Pumpenrotor und den Pumpenstator sind PEEK und/oder PPS-basierte Polymerkunststoffe.

Gemäß einer wiederum anderen bevorzugten Weiterbildung der vorliegenden Erfindung ist an der Gehäusestruktur, dem Bediener zugewandt, eine optische Anzeige angeordnet ist, welche besonders bevorzugt ein Display umfasst. Die betreffende Anzeige kann dabei insbesondere den Benutzer über die verbleibende Kapazität der Spannungsquelle bzw. verbleibende Betriebsdauer des handgeführten Druckflüssigkeitsgeräts informieren. Ein anderes für die Praxistauglichkeit des Druckflüssigkeitsgeräts sehr nutzbringendes Merkmal ist die Anordnung einer in Austrittsrichtung der Druckflüssigkeit strahlenden Lichtquelle an der Gehäusestruktur. Ganz besonders bevorzugt ist die Lichtquelle dabei an der Unterseite der Gehäusestruktur zwischen einer Griffstruktur und der Düseneinheit angeordnet. Dies ermöglicht eine Beleuchtung des Arbeitsbereichs bei nur minimaler Beeinträchtigung der Sicht des Bedieners auf den Arbeitsbereich durch Reflexe des Lichts an der Flüssigkeit, welche die Düseneinheit verlässt. Günstig für eine maximale Praxistauglichkeit ist weiterhin, wenn die Gehäusestruktur an exponierten Bereichen, d. h. insbesondere an hervorstehenden Ecken und Kanten, eine stoßdämpfende Oberflächenbeschichtung aufweist.

Im Hinblick auf die aufgezeigten Zielanwendungen ist das erfindungsgemäße handgeführte Druckflüssigkeitsgerät bevorzugt spritzwassergeschützt ausgeführt. So genügt die Gehäusestruktur bevorzugt dem IP54 Standard, insbesondere durch entsprechende Abdichtung der Trenn- bzw. Verbindungsflächen mehrere Gehäuseelemente. Ebenso sind die verbauten Komponenten selbst (Motor-Pumpe-Gruppe, Elektronik, Bedienelemente, etc.) wasserdicht gekapselt, vergossen, oder dergleichen. Und namentlich ist im Bereich einer abnehmbaren Spannungsquelle (Akku) dort, wo diese an die Gehäusestruktur angebunden wird, eine Abdichtung vorgesehen, welche die betreffende elektrische Kontaktverbindung vor Feuchtigkeit und/oder Chemikalien schützt.

Im Folgenden wird die vorliegende Erfindung anhand zweier in der Zeichnung veranschaulichter bevorzugter Ausführungsbeispiele näher erläutert. Dabei zeigt
- Fig. 1: einen Vertikalschnitt durch das vollständige handgeführte Druckflüssigkeits-Reinigungsgerät gemäß einem ersten Ausführungsbeispiel,
- Fig. 2: in vergrößerter Detaildarstellung einen Ausschnitt desselben und
- Fig. 3: einen Bereich der Pumpe der Motor-Pumpe-Gruppe im Detail gemäß einer anderen Schnittführung; und weiterhin zeigt
- Fig. 4: einen Vertikalschnitt durch das vollständige handgeführte Druckflüssigkeits-Reinigungsgerät gemäß einem zweiten Ausführungsbeispiel und
- Fig. 5: in vergrößerter Detaildarstellung einen Ausschnitt desselben.

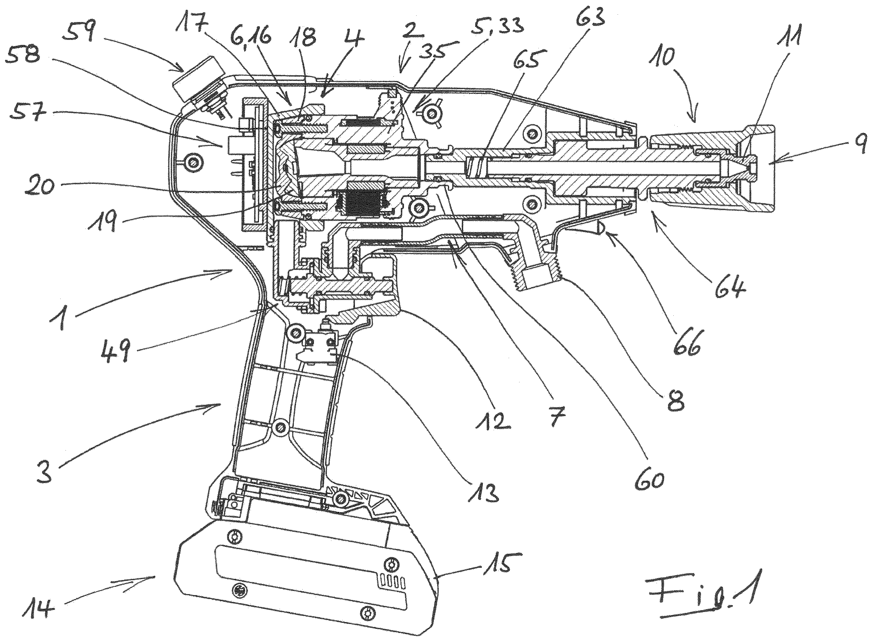

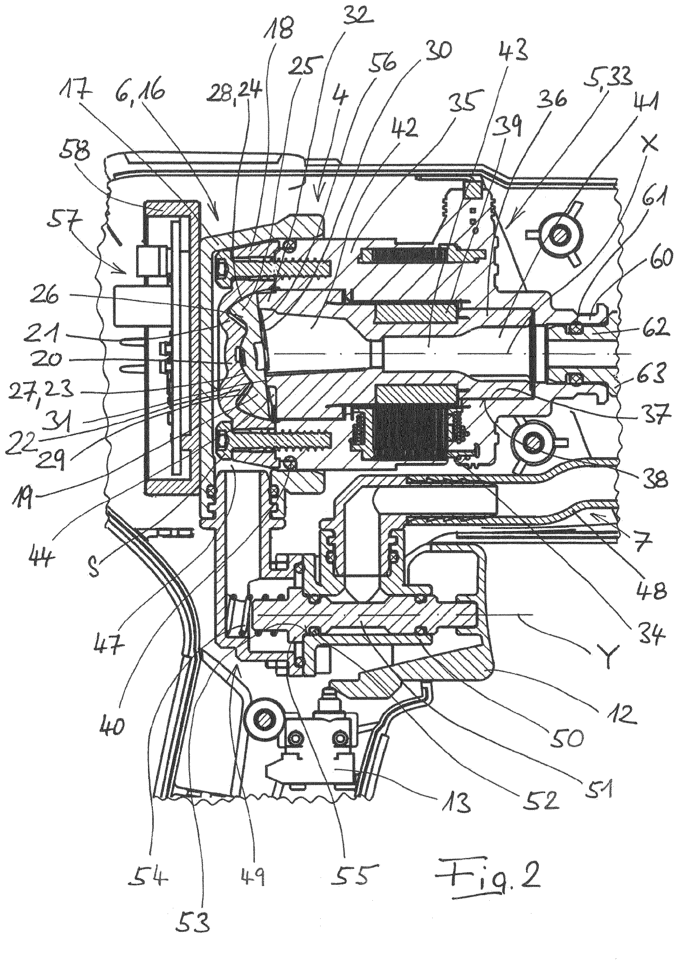

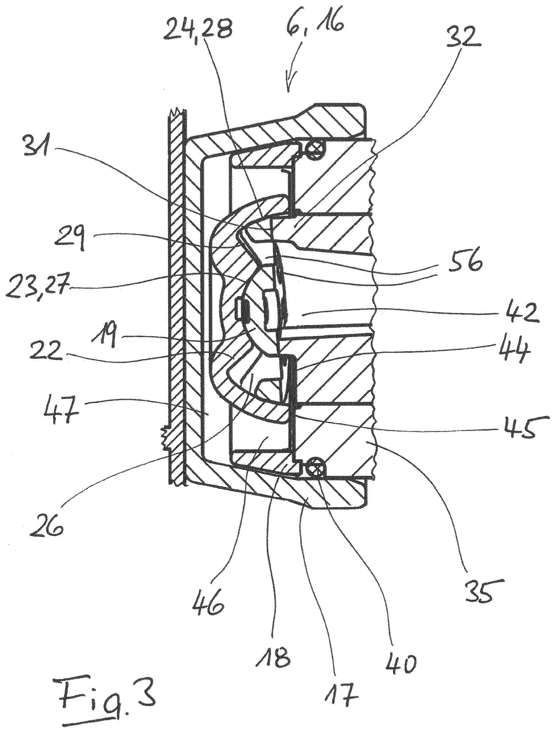

Das in den Figuren 1 bis 3 der Zeichnung dargestellte Druckflüssigkeits-Reinigungsgerät nach dem ersten Ausführungsbeispiel umfasst eine aus Kunststoff bestehende Gehäusestruktur 1 mit einem Korpus 2 und einer von diesem schräg nach unten-hinten abstehenden Griffstruktur 3. Der Korpus 2 der Gehäusestruktur 1 nimmt eine Motor-Pumpe-Gruppe 4 auf, welche einen Gleichstrom-Elektromotor 5 und eine von diesem angetriebene, zur Förderung von Flüssigkeit geeignete Pumpe 6 umfasst. An die Pumpe 6 ist saugseitig - über einen Ansaugkanal 7 - ein Flüssigkeitseinlass 8 angeschlossen, welcher an der Unterseite des Korpus' 2 vor der Griffstruktur 3 angeordnet ist. Druckseitig ist an die Pumpe 6 strömungstechnisch ein Flüssigkeitsaustritt 9 angeschlossen. Dieser ist Teil einer Düseneinheit 10 mit einer - einer definierten Strahlbildung dienenden - Düse 11. An der Griffstruktur 3 ist an deren Vorderseite ein Bedienelement 12 angeordnet, welches - vermittels eines von ihm betätigten Schalters 13 - einwirkt auf die Stromversorgung des Motors 5 der Motor-Pumpe-Gruppe 4 aus einer Spannungsquelle 14 in Form eines auswechselbar am unteren Ende der Griffstruktur 3 angeordneten Akku-Packs 15.

Nachdem das gezeigte Druckflüssigkeitsgerät, soweit die vorstehend angesprochen grundsätzlichen Gestaltungsmerkmale und technischen Gesichtspunkte betroffen sind, dem Stand der Technik (vgl. die eingangs erwähnten Dokumente) entspricht, sind insoweit nähere Erläuterungen entbehrlich.

In Abweichung von dem besagten Stand der Technik ist die Pumpe 6 der Motor-Pumpe-Gruppe 4 als Taumelrotorpumpe 16 ausgeführt, und zwar - bei dem in den Figuren 1 bis 3 gezeigten ersten Ausführungsbeispiel - in der Einzelrotor- bzw. TMC-Version. Sie umfasst ein Pumpengehäuse 17, einen darin angeordneten Pumpenstator 18 von im Wesentlichen etwa schalenförmiger Gestalt und einen darin aufgenommenen Pumpenrotor 19. Der Boden 20 des Pumpenstators 18 bildet dabei eine erste Zahnscheibe 21 mit einer ringförmigen ersten Stirnverzahnung 22, welche radial innen und radial außen jeweils von einem ringförmig geschlossenen primären Dichtsitz 23, 24 mit einer (konkaven) sphärischen Oberfläche begrenzt ist. Und der Pumpenrotor 19 bildet eine zweite Zahnscheibe 25 mit einer ringförmigen zweiten Stirnverzahnung 26, welche radial innen und radial außen jeweils von einer ringförmigen sekundären Dichtfläche 27, 28 mit einer zu der korrespondierenden Oberfläche des jeweils zugeordneten primären Dichtsitzes 23 bzw. 24 komplementären (konvexen) sphärischen Geometrie begrenzt ist. Die Zahnanzahlen der beiden - miteinander kämmenden - Stirnverzahnungen 22 und 26 unterscheiden sich um eins voneinander, wodurch im Bereich der beiden ringförmigen Stirnverzahnungen 22, 26 zwischen dem Pumpenstator 18 und dem - stets mit einem durch die Geometrie der beiden Verzahnungen 22, 26 definierten Winkel zu dem Pumpenstator 18 geneigten - Pumpenrotor 19 mehrere Pumpenräume 29 begrenzt werden. Durch die auf der Rückenfläche 30 des Pumpenrotors 19 gleitende, entsprechend dem Neigungswinkel des Pumpenrotors 19 bezüglich des Pumpenstators 18 schräg angestellte Stirnfläche 31 eines rotierenden Taumelkopfes 32 wird der Pumpenrotor 19 - bei sich drehendem Taumelkopf 32 - in eine auf dem Pumpenstator 18 abwälzende Taumelbewegung versetzt. Infolge der um eins verschiedenen Zahnanzahl der beiden Stirnverzahnungen 22 und 26 wandert der Pumpenrotor 19 dabei bei einer vollständigen Umdrehung des Taumelkopfes 32 auf der Stirnverzahnung 22 des Pumpenstators 18 um einen Zahn weiter. Die zwischen den beiden ringförmigen Stirnverzahnungen 22 und 26 eingeschlossenen Pumpenräume 29 vergrößern und verkleinern sich dabei im Pumpenbetrieb rhythmisch während eines vollständigen Umlaufs. Im Hinblick auf weitere Details wird auf den eingangs dargelegten Stand der Technik betreffend TMC-Taumelrotorpumpen verwiesen.

Der Motor 5 der Motor-Pumpe-Gruppe 4 - diese ist mit ihrem Motor 5 dem Flüssigkeitsaustritt 9 zugewandt orientiert verbaut - ist als bürstenloser Gleichstrommotor 33 ausgeführt. Er umfasst einen eine Spulenanordnung 34 aufweisenden Motorstator 35, mit welchem der Pumpenstator 18 mittels Schrauben S fest verbunden ist, und einen Motorrotor 36, welcher um die Achse X drehbar in dem hierfür vorgesehenen Innenraum 37 des Motorstators 35 aufgenommen und an seiner Umfangsfläche 38 mit Permanentmagneten 39 bestückt ist. Auf den Motorstator 35 ist, mittels der Ringdichtung 40 abgedichtet, das Pumpengehäuse 17 aufgesetzt. Das pumpenseitige, d. h. links dargestellte Ende des Motorrotors 36 ist als Taumelkopf 32 (s. o.) ausgeführt, der somit vorliegend integraler Teil des Motorrotors 36 ist. Der Motorrotor 36 ist über seine gesamte Länge von einem Hohlraum 41 durchsetzt, welcher an der Stirnfläche 31 des Taumelkopfes 32 in einer druckseitigen Steueröffnung 42 mündet und einen Druckfluidkanal 43 bildet, der Teil des den Pumpenausgang mit dem Flüssigkeitsaustritt 9 verbindenden Strömungswegs ist.

Eine ebenfalls an der Stirnfläche 31 des Taumelkopfes 32 ausgeführte saugseitige Steuermulde 44 kommuniziert mit einem zwischen dem Pumpenstator 18 und dem Motorstator 35, d. h. dessen Stirnseite, ausgebildeten Ringraum 45, welcher seinerseits über eine Mehrzahl von den Pumpenstator 18 durchsetzenden Saugfluidkanälen 46 mit dem zwischen dem Pumpengehäuse 17 und dem Pumpenstator 18 definierten Pumpen-Saugraum 47 kommuniziert. In letzteren mündet eine sich zwischen dem Flüssigkeitseinlass 8 und dem Pumpen-Saugraum 47 erstreckende Saugleitung 48. In diese ist ein Absperrventil 49 integriert mit einem Ventilgehäuse 50, in welchem, längs ihrer Achse Y verschiebbar, eine Ventilspindel 51 aufgenommen ist. Ein auf der Ventilspindel 51 vorgesehener O-Ring 52 wirkt - in der gezeigten Absperrstellung - dichtend mit einer Bohrung 53 des Ventilgehäuses 50 zusammen. Eine Schließfeder 54 wirkt auf die Ventilspindel 51 im Sinne der Absperrstellung, welche durch einen an der Ventilspindel 51 ausgeführten, mit einen an dem Ventilgehäuse 50 ausgeführten Anschlag zusammenwirkenden Bund 55 definiert ist. Das den Schalter 13 betätigende Bedienelement 12 wirkt zugleich auch auf die Ventilspindel 51 dergestalt, dass das Absperrventil 50 öffnet, wenn der Motor 5 der Motor-Pumpe-Gruppe 4 mit Strom beaufschlagt wird und anläuft. Ersichtlich wäre in einer alternativen Ausgestaltung auch die Ausführung des Absperrventils als unter eintrittsseitigem Vordruck schließendes Sitzventil möglich.

Über Kanäle 56, welche den Pumpenrotor 19 durchsetzen und im Bereich der rotorseitigen Stirnverzahnung 26 jeweils zwischen zwei Zähnen münden, kommunizieren beim Drehen des Taumelkopfes 32 die Pumpenräume 29 jeweils abwechselnd mit der (saugseitigen) Steuermulde 44 und der (druckseitigen) Steueröffnung 42, wobei die - infolge der Taumelbewegung des Pumpenrotors 19 - sich vergrößernden Pumpenräume 29 mit der Steuermulde 44 kommunizieren und die sich verkleinernden Pumpenräume mit der Steueröffnung 42.

Die Förderleistung der Motor-Pumpe-Gruppe 4 ist verstellbar. Hierzu dient eine Leistungselektronik 57, welche geschützt in einer schalenförmigen Aufnahme 58 untergebracht ist, die ihrerseits großflächig wärmeleitend an der Außenseite des Pumpengehäuses 17 angebracht ist. So erfolgt eine wirksame Kühlung der Leistungselektronik 57 mittels des das Pumpengehäuse 17 durchströmenden Fluids. Auf die Leistungselektronik 57 wirkt ein Leistungs-Drehregler 59, welcher - dem Bediener zugewandt - obenauf dem Korpus 2 der Gehäusestruktur 1 angeordnet ist.

Der der Pumpe 6 abgewandte Endbereich des Motorstators 35 weist einen Stutzen 60 auf, in welchen, mittels Dichtring 61 abgedichtet, der Anschlussbereich 62 einer - in dem Korpus 2 der Gehäusestruktur 1 aufgenommenen - Düsenaufnahme 63 eingesteckt ist. Die Düsenaufnahme 63 dient der auswechselbaren Anbringung verschiedener anwendungsspezifischer, unterschiedliche Düseneinheiten 10 aufweisender Düseneinsätze 64, welche beispielsweise mittels eines - mittels der Feder 65 vorgespannten - Bajonett-Verschlusses an der Düsenaufnahme 63 fixierbar sind.

An der Unterseite des Korpus' 2 der Gehäusestruktur 1 ist - in Arbeitsrichtung - unmittelbar vor dem Flüssigkeitseinlass 8 eine in Austrittsrichtung der Druckflüssigkeit strahlende Lichtquelle 66 angeordnet. Durch die säure- und basenresistente Ausführung sämtlicher flüssigkeitsführender Komponenten eignet sich das Druckflüssigkeits-Reinigungsgerät für eine Vielzahl von Anwendungen. Insbesondere kann es auch eingesetzt werden im industriellen Anwendungsbereich, wo mit hochkonzentrierten Chemikalien gearbeitet wird.

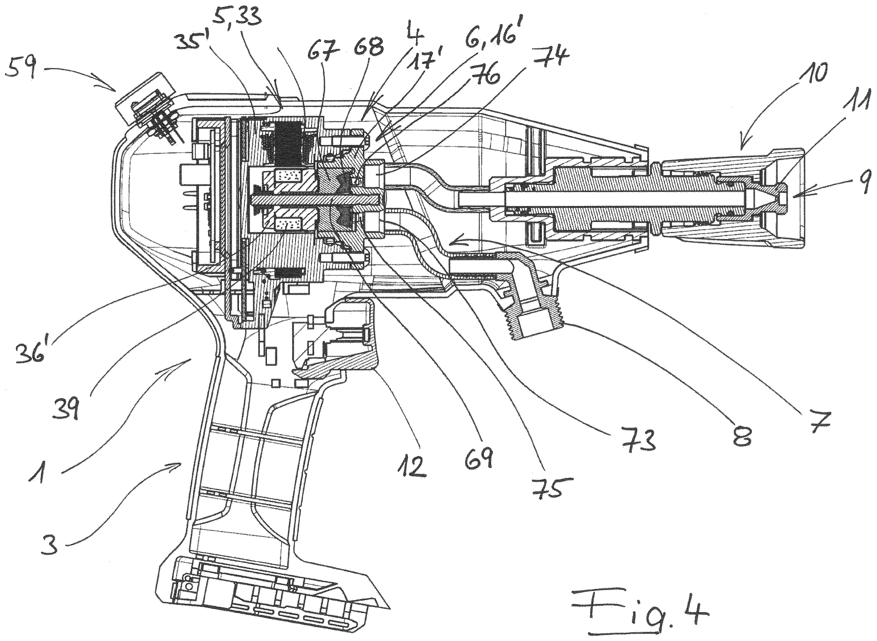

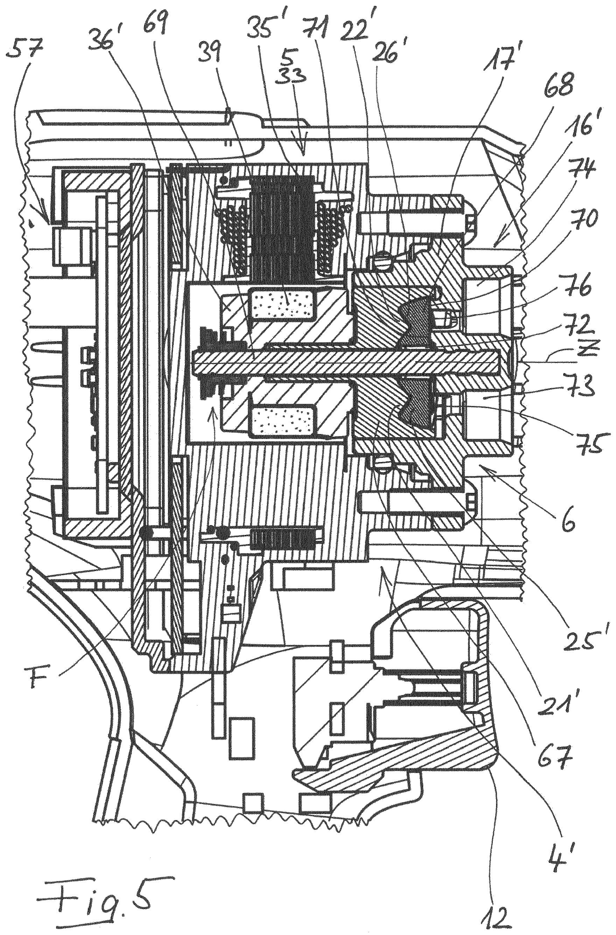

Zu dem in den Figuren 4 und 5 - ohne seine Batterie - veranschaulichten zweiten Ausführungsbeispiel eines erfindungsgemäßen handgeführten Druckflüssigkeitsgeräts erschließen sich diverse technische Gesichtspunkte und Besonderheiten einem Fachmann bereits aus der vorstehenden, das erste Ausführungsbeispiel betreffenden Erläuterung. Auf diese wird - zur Vermeidung von Wiederholungen - verwiesen, wobei die Übereinstimmung durch die Verwendung gleicher Bezugszeichen zum Ausdruck kommt.

Der entscheidende Unterschied des zweiten Ausführungsbeispiels zum ersten besteht in der Ausführung der Motor-Pumpe-Gruppe 4' dergestalt, dass eine Taumelrotorpumpe 16' nach dem Doppelrotor-Konzept zum Einsatz kommt, und der dabei realisierten Einbausituation. Und zwar sind hier die beiden Zahnscheiben 21', 25' der Taumelrotorpumpe 16' rotierend ausgeführt. Eine treibende Zahnscheibe 21', welche Teil eines ersten Pumpenrotors 67 ist, ist mit dem bürstenlosen Gleichstrommotor 33, d. h. mit dessen Motorrotor 36' drehgekoppelt. Sie versetzt - über die miteinander kämmenden Stirnverzahnungen 22' und 26' - die getriebene Zahnscheibe 25', welche Teil eines zweiten Pumpenrotors 68 ist, in Drehung. Der Motorrotor 36' und der erste Pumpenrotor 67 sind zu einer Baugruppe gefügt; sie rotieren gemeinsam um die Achse Z des Zapfens 69, welcher starr mit dem Pumpengehäuse 17' verbunden ist, welches seinerseits dichtend mit dem gehäuseartigen Motorstator 35' verbunden ist. Die Dreh-Lagerung der Baugruppe aus Motorrotor 36' und erstem Pumpenrotor 67 erfolgt dabei über die - ein Gleitlager bildende - Paarung aus der zylindrischen Umfangsfläche des ersten Pumpenrotors 67 und dem korrespondierenden zylindrischen Aufnahmeraum des Pumpengehäuses 17'.

Der zweite Pumpenrotor 68 liegt mit seiner der zugeordneten Stirnverzahnung 26' abgewandten Stirnseite 70 gleitend an einer Stützfläche 71 an, welche zu der Rotationsachse Z des Motorrotors 36' und des ersten Pumpenrotors 67 geneigt an dem Pumpengehäuse 17' ausgeführt ist. Er weist einen zentralen Durchbruch 72 auf, durch welchen der Zapfen 69 hindurchtritt. An dem Pumpengehäuse 17' sind ein Pumpeneinlass 73 und ein Pumpenauslass 74 ausgeführt, welche jeweils mit an der Stützfläche 71 ausgeführten Steueröffnungen 75 bzw. 76 kommunizieren. Eine zwischen dem freien Ende des Zapfens 69 und dem Motorrotor 36' - mit axialer Wirkrichtung - eingespannte Feder F sorgt für ein Anliegen des ersten Pumpenrotors 67 an dem zweiten Pumpenrotor 68 sowie des letzteren an dem Pumpengehäuse 17' in den jeweils betreffenden Kontaktzonen mit einer vorgegebenen Anlagekraft.

Im Hinblick auf weitere Details der beim zweiten Ausführungsbeispiel zum Einsatz kommenden Motor-Pumpe-Gruppe wird verwiesen auf die (zum Anmeldetag der vorliegenden Patentanmeldung noch ausstehende) Offenlegung zur deutschen Patentanmeldung 10 2020 124 825.3 sowie den weiteren eingangs im Hinblick auf Doppelrotor-Taumelrotorpumpen genannten Stand der Technik.

Bei dieser Ausführungsform ist die Motor-Pumpe-Gruppe 4' mit der Pumpe 6 dem Flüssigkeitsaustritt 9 zugewandt orientiert verbaut. Hingewiesen wird - zur Vermeidung von Fehlvorstellungen - darauf, dass auch hier das Bedienelement 12 einen - nicht gezeigten - Schalter betätigt, welcher die Strombeaufschlagung des Motors 5 steuert. Ersichtlich kann bei Bedarf auch, wie bei dem ersten Ausführungsbeispiel, in den Ansaugkanal 7 oder an sonstiger geeigneter Position ein Absperrventil vorgesehen sein, wobei dies allerdings gerade bei auf sehr geringe Durchsätze (wie beispielsweise etwa 100 l/h) ausgelegten, beispielsweise für das Ausbringen von Desinfektionsmitteln bestimmten Druckflüssigkeitsgeräten nach der Erfindung typischerweise entbehrlich ist.

## Patentansprüche

1. Handgeführtes Druckflüssigkeitsgerät, insbesondere Druckflüssigkeits-Reinigungsgerät, umfassend eine eine Motor-Pumpe-Gruppe (4; 4') aufnehmende Gehäusestruktur (1) mit einem saugseitig an die Pumpe (6) angeschlossenen Flüssigkeitseinlass (8) und einem druckseitig an die Pumpe (6) angeschlossenen, an einer Düseneinheit (10) ausgeführten Flüssigkeitsaustritt (9), eine elektrische Spannungsquelle (14) und mindestens ein auf die Stromversorgung des Motors (5) durch die Spannungsquelle (14) einwirkendes Bedienelement (12), **dadurch gekennzeichnet, dass** der Motor (5) der Motor-Pumpe-Gruppe (4; 4') als bürstenloser Gleichstrommotor (33) und die Pumpe (6) als Taumelrotorpumpe (16; 16') mit zwei jeweils eine ringförmige Stirnverzahnung (22, 26; 22', 26') aufweisenden Zahnscheiben (21, 25; 21' 25') ausgeführt ist, wobei die Zahnanzahlen der beiden miteinander kämmenden Stirnverzahnungen (22, 26; 22', 26') sich um eins voneinander unterscheiden und die im Winkel zueinander angeordneten Zahnscheiben (21, 25; 21', 25') dergestalt relativ zueinander wandern, dass die Stirnverzahnungen (22, 26; 22', 26') mehrere sich im Pumpenbetrieb vergrößernde und verkleinernde Pumpenräume (29) begrenzen.

2. Druckflüssigkeitsgerät nach Anspruch 1, **dadurch gekennzeichnet, dass** eine der beiden Zahnscheiben (21) auf einem Pumpenstator (18) und die andere Zahnscheibe (25) auf einem auf diesem taumelnd abgewälzten Pumpenrotor (19) ausgeführt ist, wobei der bürstenlose Gleichstrommotor (33) über einen Taumelkopf (32) auf den Pumpenrotor (19) einwirkt, indem der Taumelkopf (32) mit seiner zur Rotationsachse (X) des Taumelkopfs (32) geneigten Stirnfläche (31) an der der Stirnverzahnung (26) abgewandten Seite des Pumpenrotors (19) an diesem anliegt.

3. Druckflüssigkeitsgerät nach Anspruch 2, **dadurch gekennzeichnet, dass** die Motor-Pumpe-Gruppe (4) mit dem Motor (5) dem Flüssigkeitsaustritt (9) zugewandt orientiert ist.

4. Druckflüssigkeitsgerät nach Anspruch 3, **dadurch gekennzeichnet, dass** der Motor (5) einen durchgehend hohlen Motorrotor (36) aufweist, dessen Hohlraum (41) Teil des den Pumpenausgang mit dem Flüssigkeitsaustritt (9) verbindenden Strömungswegs ist.

5. Druckflüssigkeitsgerät nach Anspruch 1, **dadurch gekennzeichnet, dass** die beiden Zahnscheiben (21', 25') der Taumelrotorpumpe (16') rotierend ausgeführt sind mit einer mit dem bürstenlosen Gleichstrommotor (33) drehgekoppelten treibenden Zahnscheibe (21') und einer von dieser in Drehung versetzten getriebenen Zahnscheibe (25').

6. Druckflüssigkeitsgerät nach Anspruch 5, **dadurch gekennzeichnet, dass** die Motor-Pumpe-Gruppe (4') mit der Pumpe (6) dem Flüssigkeitsaustritt (9) zugewandt orientiert ist.

7. Druckflüssigkeitsgerät nach Anspruch 5 oder Anspruch 6, **dadurch gekennzeichnet, dass** die Motor-Pumpe-Gruppe (4') einen gehäuseartigen Motorstator (35') und ein dichtend mit diesem verbundenes, den Pumpeneinlass (73) und den Pumpenauslass (74) aufweisendes Pumpengehäuse (17') umfasst, wobei mit dem Pumpengehäuse (17') ein feststehender Zapfen (69) verbunden ist, der durch die treibende Zahnscheibe (21') und zumindest teilweise durch den Motorrotor (36') hindurchtritt.

8. Druckflüssigkeitsgerät nach einem der Ansprüche 1 bis 7, **dadurch gekennzeichnet, dass** die Gehäusestruktur (1) eine Griffstruktur (3) aufweist, wobei die Spannungsquelle (14) abnehmbar an der Griffstruktur (3) angeordnet ist.

9. Druckflüssigkeitsgerät nach einem der Ansprüche 1 bis 8, **dadurch gekennzeichnet, dass** die Düseneinheit (10) verstellbar ist und mehrere unterschiedlich ausgeführte Düsen (11) aufweist, von denen jeweils eine fluidisch mit dem Druckausgang der Pumpe (6) koppelbar ist.

10. Druckflüssigkeitsgerät nach einem der Ansprüche 1 bis 9, **dadurch gekennzeichnet, dass** der Flüssigkeitsauslass (9) an einem abnehmbaren Düseneinsatz (64) ausgeführt ist.

11. Druckflüssigkeitsgerät nach einem der Ansprüche 1 bis 10, **dadurch gekennzeichnet, dass** das Bedienelement (12) auf ein Absperrventil (49) einwirkt, welches in dem Strömungsweg zwischen Flüssigkeitseinlass (8) und Flüssigkeitsaustritt (9) angeordnet ist, und zwar bevorzugt stromaufwärts der Pumpe (6).

12. Druckflüssigkeitsgerät nach einem der Ansprüche 1 bis 11, **dadurch gekennzeichnet, dass** die Motor-Pumpe-Gruppe (4; 4') mit veränderlichem Flüssigkeitsdurchsatz betreibbar ist, zu dessen Verstellung bevorzugt ein an der Gehäusestruktur (1) angeordneter Dreh- oder Schieberegler (59) vorgesehen ist.

13. Druckflüssigkeitsgerät nach einem der Ansprüche 1 bis 12, **dadurch gekennzeichnet, dass** die flüssigkeitsführenden Komponenten säure- und basenresistent sind.

14. Druckflüssigkeitsgerät nach einem der Ansprüche 1 bis 13, **dadurch gekennzeichnet, dass** an der Gehäusestruktur (1), dem Bediener zugewandt, eine optische Anzeige angeordnet ist, welche bevorzugt ein Display umfasst.

15. Druckflüssigkeitsgerät nach einem der Ansprüche 1 bis 14, **dadurch gekennzeichnet, dass** an der Gehäusestruktur (1) eine in Austrittsrichtung der Druckflüssigkeit strahlende Lichtquelle (66) angeordnet ist.

16. Druckflüssigkeitsgerät nach einem der Ansprüche 1 bis 15, **dadurch gekennzeichnet, dass** die Gehäusestruktur (1) an exponierten Bereichen eine stoßdämpfende Oberflächenbeschichtung aufweist.

## Claims

1. A hand-operated pressurized-fluid device, especially a pressurized-fluid cleaning device, comprising a housing structure (1) receiving a motor-pump group (4; 4') and having a fluid inlet (8) connected on the suction side to the pump (6) and a fluid outlet (9) connected on the pressure side to the pump (6) and constructed on a nozzle unit (10), an electrical voltage source (14) and at least one operator-control element (12) acting on the power supply of the motor (5) via the voltage source (14),
**characterized in that** the motor (5) of the motor-pump group (4; 4') is constructed as a brushless direct-current motor (33) and the pump (6) is constructed as a wobbling-rotor pump (16; 16') having two toothed plates (21, 25; 21', 25') respectively provided with an annular spur gearing (22, 26; 22', 26'), wherein the numbers of teeth of the two spur gearings (22, 26; 22', 26') meshing with one another differ by one from one another and the toothed plates (21, 25; 21' 25') disposed at an angle to one another wander relative to one another in such a way that the spur gearings (22, 26; 22', 26') bound several pump spaces (29) that become larger and smaller during pump operation.

2. The pressurized-fluid device of claim 1, **characterized in that** one of the two toothed plates (21) is constructed on a pump stator (18) and the other toothed plate (25) is constructed on a pump rotor (19) rolling in wobbling manner on this, wherein the brushless direct-current motor (33) acts via a wobbling head (32) on the pump rotor (19), **in that** the wobbling head (32) having its end face (31) inclined relative to the axis of rotation (X) of the wobbling head (32) bears on the pump rotor (19) on its side facing away from the spur gearing (26).

3. The pressurized-fluid device of claim 2, **characterized in that** the motor-pump group (4) is oriented such that the motor (5) faces the fluid outlet (9).

4. The pressurized-fluid device of claim 3, **characterized in that** the motor (5) has a continuously hollow motor rotor (36), the hollow space (41) of which is part of the flow pathway connecting the pump outlet with the fluid outlet (9).

5. The pressurized-fluid device of claim 1, **characterized in that** the two toothed plates (21', 25') of the wobbling-rotor pump (16') are constructed with rotating ability, wherein one toothed plate (21') is rotationally coupled with the brushless direct-current motor (33) in driving relationship and one toothed plate (25') is thereby caused to move in rotation in driven relationship.

6. The pressurized-fluid device of claim 5, **characterized in that** the motor-pump group (4') is oriented such that the pump (6) faces the fluid outlet (9).

7. The pressurized-fluid device of claim 5 or claim 6, **characterized in that** the motor-pump group (4') comprises a housing-like motor stator (35') and a pump housing (17') connected sealingly therewith and provided with the pump inlet (73) and the pump outlet (74), wherein a fixed journal (69), which passes through the driven toothed plate (21') and at least partly through the motor rotor (36'), is connected with the pump housing (17').

8. The pressurized-fluid device of one of claims 1 to 7, **characterized in that** the housing structure (1) is provided with a grip structure (3), wherein the voltage source (14) is disposed removably on the grip structure (3).

9. The pressurized-fluid device of one of claims 1 to 8, **characterized in that** the nozzle unit (10) is adjustable and is provided with several differently constructed nozzles (11), of which one respectively can be coupled fluidically with the pressure outlet of the pump (6).

10. The pressurized-fluid device of one of claims 1 to 9, **characterized in that** the fluid outlet (9) is constructed on a removable nozzle insert (64).

11. The pressurized-fluid device of one of claims 1 to 10, **characterized in that** the operator-control element (12) acts on a shutoff valve (49), which is disposed in the flow pathway between fluid inlet (8) and fluid outlet (9), and specifically preferably upstream from the pump (6).

12. The pressurized-fluid device of one of claims 1 to 11, **characterized in that** the motor-pump group (4; 4') can be operated with variable fluid throughput, for the adjustment of which preferably a control knob or slider (59) disposed on the housing structure (1) is provided.

13. The pressurized-fluid device of one of claims 1 to 12, **characterized in that** the fluid-carrying components are acid-resistant and base-resistant.

14. The pressurized-fluid device of one of claims 1 to 13, **characterized in that** an optical indicator, which preferably comprises a display, is disposed on the housing structure (1) in a manner facing the controlling operator.

15. The pressurized-fluid device of one of claims 1 to 14, **characterized in that** a light source (66) emitting in the outlet direction of the pressurized fluid is disposed on the housing structure (1).

16. The pressurized-fluid device of one of claims 1 to 15, **characterized in that** the housing structure (1) is provided on exposed regions with an impact-damping surface coating.

## Revendications

1. Appareil à fluide sous pression portatif, en particulier un appareil de nettoyage à fluide sous pression, comprenant une structure de boîtier (1) accueillant un groupe pompe-moteur (4 ; 4'), avec une entrée de fluide (8) raccordée à la pompe (6) côté aspiration et une sortie de fluide (9) raccordée à la pompe (6) côté pression, réalisée sur une unité de buse (10), une source de tension électrique (14) et au moins un élément de commande (12) agissant sur l'alimentation électrique du moteur (5) par le biais de la source de tension (14), **caractérisé en ce que** le moteur (5) du groupe pompe-moteur (4 ; 4') est réalisé comme un moteur à courant continu sans balai (33) et la pompe (6) est réalisée comme une pompe à rotor oscillant (16 ; 16') dotée de deux disques dentés (21, 25 ; 21', 25') présentant respectivement une denture frontale annulaire (22, 26 ; 22', 26'), dans lequel le nombre de dents des deux dentures frontales (22, 26 ; 22', 26') en engrènement mutuel varie de un et les disques dentés (21, 25 ; 21', 25') disposés selon un angle les uns par rapport aux autres se déplacent de telle façon les uns par rapport aux autres, que les dentures frontales (22, 26 ; 22', 26') délimitent plusieurs chambres de pompe (29) s'agrandissant et rétrécissant pendant le fonctionnement de la pompe.

2. Appareil à fluide sous pression selon la revendication 1, **caractérisé en ce que** l'un des deux disques dentés (21) est réalisé sur un stator de pompe (18) et l'autre disque denté (25) est réalisé sur un rotor de pompe (19) en rotation oscillante, dans lequel le moteur à courant continu sans balai (33) agit sur le rotor de pompe (19) par le biais d'une tête oscillante (32), par le fait que la tête oscillante (32) s'applique sur le rotor de pompe (19) avec sa surface frontale (31) inclinée vers l'axe de rotation (X) de la tête oscillante (32), sur le côté de celui-ci opposé à la denture frontale (26).

3. Appareil à fluide sous pression selon la revendication 2, **caractérisé en ce que** le groupe pompe-moteur (4) est orienté de manière à être tourné avec le moteur (5) vers la sortie de fluide (9).

4. Appareil à fluide sous pression selon la revendication 3, **caractérisé en ce que** le moteur (5) présente un rotor de moteur (36) continuellement creux, dont l'espace creux (41) fait partie du trajet d'écoulement reliant la sortie de pompe à la sortie de fluide (9).

5. Appareil à fluide sous pression selon la revendication 1, **caractérisé en ce que** les deux disques dentés (21', 25') de la pompe à rotor oscillant (16') sont conçus de façon rotative avec un disque denté d'entraînement (21') couplé en rotation avec le moteur à courant continu sans balai (33) et un disque denté entraîné (25') mis en rotation par celui-ci.

6. Appareil à fluide sous pression selon la revendication 5, **caractérisé en ce que** le groupe pompe-moteur (4') est orienté de manière à être tourné avec la pompe (6) vers la sortie de fluide (9).

7. Appareil à fluide sous pression selon la revendication 5 ou la revendication 6, **caractérisé en ce que** le groupe pompe-moteur (4') comporte un stator de moteur du genre boîtier (35') et un boîtier de pompe (17') présentant l'entrée de pompe (73) et la sortie de pompe (74), relié de façon étanche à celui-ci, dans lequel un tourillon fixe (69) est relié au boîtier de pompe (17'), lequel traverse le disque denté d'entraînement (21') et au moins partiellement le rotor de moteur (36').

8. Appareil à fluide sous pression selon l'une des revendications 1 à 7, **caractérisé en ce que** la structure de boîtier (1) présente une structure de poignée (3), dans lequel la source de tension (14) est disposée de façon amovible sur la structure de poignée (3).

9. Appareil à fluide sous pression selon l'une des revendications 1 à 8, **caractérisé en ce que** l'unité de buse (10) est réglable et présente plusieurs buses (11) conçues différemment, dont l'une peut être respectivement couplée fluidiquement à la sortie de pression de la pompe (6).

10. Appareil à fluide sous pression selon l'une des revendications 1 à 9, **caractérisé en ce que** la sortie de fluide (9) est réalisée sur un insert de buse amovible (64).

11. Appareil à fluide sous pression selon l'une des revendications 1 à 10, **caractérisé en ce que** l'élément de commande (12) agit sur une vanne d'arrêt (49), laquelle est disposée sur le trajet d'écoulement entre l'entrée de fluide (8) et la sortie de fluide (9), et notamment en amont de la pompe (6).

12. Appareil à fluide sous pression selon l'une des revendications 1 à 11, **caractérisé en ce que** le groupe pompe-moteur (4 ; 4') peut être actionné avec un passage de fluide modifiable, pour le réglage duquel il est prévu de préférence un bouton rotatif ou poussoir (59) disposé sur la structure de boîtier (1).

13. Appareil à fluide sous pression selon l'une des revendications 1 à 12, **caractérisé en ce que** les composants de guidage de fluide sont résistants aux bases acides et alcalines.

14. Appareil à fluide sous pression selon l'une des revendications 1 à 13, **caractérisé en ce qu'**un affichage optique comportant de préférence un écran est disposé sur la structure de boîtier (1), en face de l'opérateur.

15. Appareil à fluide sous pression selon l'une des revendications 1 à 14, **caractérisé en ce qu'**une source de lumière (66) émettant un rayonnement vers la sortie du fluide sous pression est disposée sur la structure de boîtier (1).

16. Appareil à fluide sous pression selon l'une des revendications 1 à 15, **caractérisé en ce que** la structure de boîtier (1) présente un revêtement de surface antichoc dans les zones exposées.
